# EUROPEAN PATENT SPECIFICATION

(11) **EP 2 802 613 B1**
(45) Date of publication and mention of the grant of the patent: **24.07.2019**
(21) Application number: 13713963.0
(22) Date of filing: 09.01.2013
(51) Int. Cl.: D21C 9/00, D21C 3/02, D21C 5/00, C08B 1/00, C08B 16/00, C08B 15/08, C08G 18/64, C08G 18/76, C08L 83/00, C08G 101/00, C08K 5/00

(54) **PROCESS FOR DESTRUCTURING A CELLULOSE PULP, RESULTING PRODUCT AND USES OF THE PRODUCT**
VERFAHREN ZUR DESTRUKTURIERUNG EINES ZELLSTOFFS, ENDPRODUKT UND VERWENDUNGEN DES PRODUKTS
PROCÉDÉ DE DÉSTRUCTURATION D'UNE PÂTE DE CELLULOSE, PRODUIT OBTENU ET APPLICATIONS DU PRODUIT

(30) Priority: 09.01.2012 IT TO20120006
(43) Date of publication of application: 19.11.2014
(73) Proprietor: Hypucem S.r.l., Portici (IT)
(72) Inventor: VERDOLOTTI, Letizia, I-84091 Battipaglia (IT); LAVORGNA, Marino, I-82030 Puglianello (IT); DI MAIO, Ernesto, I-80122 Napoli (IT); IANNACE, Salvatore, I-80127 Napoli (IT)
(74) Representative: Bosia, Alessandra
(86) International application number: PCT/IB2013/050199
(87) International publication number: WO 2013/105040

(56) References cited:
- WO-A1-98/23814
- GB-A- 1 500 053
- US-A- 2 056 995
- US-A- 4 328 136
- US-A- 5 137 599

## Description

The present invention relates to a process for destructuring a cellulose pulp, to a product resulting from this process and to uses of the product.

### Background art

Cellulose is a structural polysaccharide very widespread in nature, obtained from cotton and mainly from lignocellulosic sources such as sugar cane plants, bamboo, plant biomass, etc.

In particular, wood contains 40-50% of cellulose, together with other polysaccharides, the most important of which is hemicellulose (which forms 20-30%), and lignin (a polymer compound with an aromatic base present in an amount of 40-20%).

Cellulose is formed by an unbranched polymer chain of glucose molecules joined together by a glycosidic bond β 1->4. The rough formula of cellulose is (C₆H₁₀O₅)ₙ with "n" that can reach up to 10'000 and has an average molecular weight of 400'000 g/mol, corresponding approximately to 2800 glucose units per molecule.

From a chemical viewpoint, cellulose has three alcohol groups (-OH) per repeating d-glucose unit, which can potentially react.

The chains are arranged parallel to one another and are held together by very strong hydrogen bonds, forming fibrils. The fibrils are locally very orderly, to the extent of having a crystalline structure, which can vary according to the thermal and mechanical treatments (facilitated by solvents) to which the cellulose is subjected.

The percentage of crystallinity of the cellulose varies from 50 to 90% according to origin.

These features make this system difficult to dissolve. Moreover, the quantity of hydroxyl groups present on the surface of the fibrils/fibres is not sufficient to cause separation of the single "chains" when the fibrils are placed in contact with a hydrophilic solvent.

The amorphous regions are undoubtedly more permeable to water or to hydrophilic/ionic solvents; nonetheless, also the amorphous part is not easily dissolved, due to the strong bonds between chains existing between the polysaccharide macromolecules.

As for all polymers, cellulose can also give chain degradation reactions, due to hydrolysis with acids, heat treatments or via bacteria.

In very basic solutions, cellulose is separated in three steps: *α-cellulose* (the insoluble part) which represents the most prestigious fraction, *β-cellulose* which constitutes the part that has solubilised but which can reprecipitate in the presence of acids, and *γ-cellulose* which is the solubilised part but which cannot reprecipitate by adding acids.

In particular, it is known that cellulose has six polymorphic forms (I, II, III₁, III₁₁, IV₁ and IV₁₁) which can be converted into one another.

The polymorphic structure of type I is constituted, in turn, by joining of two polymorphic structures known as Iα and Iβ. Type I cellulose, or native cellulose, is the form found in nature. Type II cellulose can be obtained from type I through two processes: a) *regeneration,* which is solubilisation of cellulose I in specific solvents, following by reprecipitation in water; b) *mercerisation,* which consists of swelling the original fibres in a highly alkaline solution (sodium hydroxides, potassium) which produces type II cellulose after removal of the alkaline solvent. Type III₁ and III₁₁ polymorphic forms are formed from type I and II cellulose through a reversible process that involves treatment with liquid ammonia (or amine) and subsequent evaporation/removal of the excess ammonia. Type IV₁ and IV₁₁ polymorphic forms can be prepared by heating type III₁ and III₁₁ cellulose to 206°C in glycerol.

Therefore, as already known in the state of the art it is possible to mercerise/swell cellulose matrices (polysaccharides with high crystallinity of type I) using alkaline solutions, such as silicate solutions. In particular, these treatments involve the use of high temperatures and a prior process to remove lignin from the cellulose matrices.

Moreover, treatments are known to solubilise the cellulose in the presence of organic solvents.

These processes also take place at high temperatures (150-200°C) and by a subsequent process to remove the solvents used, and lead to the formation of high reactive macromolecular systems capable of reacting with various reagents, such as aldehydes, furan compounds, polyisocyanates and polyurethane prepolymers.

Examples of these processes can be found in US4226982, US4347345, US4281110, US4328136, US4377674, US4220757, US4313857.

However, there are different problems linked to the processes currently used.

When the treatments are based on the use of organic solvents, the main drawback is that, at the end of the process, the solvents must be removed through complex purification processes to enable use of the polyhydroxyl.

US4328136 describes a process for impregnating and reacting silicic acid particles to produce lignin-cellulose-silicate products impregnated with hydrated silica.

This process has various drawbacks.

Firstly, the initial lignin-cellulose substrate consists exclusively of different types of sawdust, which have a hemicellulose fraction that is easy to hydrate and remove. As treatment in the presence of basic silicate has a very limited duration, only the hemicellulose fraction will be destructured and the treatment will only lead to defibration due to removal of the compounds cementing the single cellulose fibrils, with consequent defibration of the largest fibres into increasingly thin fibrils. Such a short treatment cannot be used with substrates that initially contain mainly cellulose (such as cellulose pulp), as this would not enable sufficient destructuring of the hierarchic structure of the biomass for solubilisation of the cellulose.

Moreover, using the process of US4328136 it is necessary to dry the product obtained before using it with polyisocyanate, or use water binding agents to minimise the negative effect represented by the presence of water on the possible uses of the product of destructurisation.

### Technical problem

An object of the present invention is to provide a process for destructuring a cellulose pulp that does not require organic solvents which must be separated/removed at the end of the process, which does not use high temperatures, which does not require purification/extraction of the lignin from the matrix, which does not involve a subsequent step of eliminating water for use of the product obtained and which enables use of the initial materials based on cellulose organized in complex manner.

This object is achieved by the present invention by the process according to claim 1.

### Definitions

By the term "short fibre polyhydroxy components" and similar expressions it is intended that the polyhydroxy components are fibres by more than 50% having a diameter with a size smaller or equal to 50 µm.

By the term "long fibre polyhydroxy components" and similar expressions it is intended that the polyhydroxy components are fibres by more than 50% having a diameter with a size greater than 50 µm.

The terms "destructure", "destructuring" and similar expressions are intended as the elimination of a fraction of hydrogen bonds responsible for the hierarchic structure of the cellulose in the amount of 10% or > 10%, with consequent solubilisation of the cellulose fibrils.

The term cellulose pulp is intended as a polyhydroxy system mainly constituted by cellulose fibres with negligible residues of lignin and hemicellulose, deriving from the steam explosion process or other processes suitable for valorising the biomass for further applications.

Hybrid polyhydroxy product and similar expressions are intended as an adduct constituted by the intimate and covalent interaction between the polyhydroxy organic component deriving from the cellulose macromolecules and the inorganic component, also polyhydroxy deriving from the silicate phase.

### Brief description of the figures

For a better understanding of the present invention, some non-limiting examples of the invention are described below, with reference to the accompanying figures, wherein:
- Fig. 1a illustrates two optical microscope images of cellulose fibres dispersed in water (the water is used as a dispersion medium to facilitate observation under the microscope) and a schematic drawing of their structure in native state.
- Fig. 1b illustrates a schematic drawing of the structure of the cellulose fibres intercalated with silica due to the action of the silicate solution for a time of over one week.
- Fig. 1c illustrates a schematic drawing of destructured cellulose obtained after a treatment of 2-5 months with the silicate solution.
- Fig. 2 illustrates the crystalline component of three lignocellulose matrices: conifer, cotton and wood pulp by diffractometry analysis;
- Fig. 3 illustrates the Gaussian distribution of the diameters of the native cellulose fibres in water;
- Fig. 4 illustrates an image, under the polarised light optical microscope, of cellulose fibres treated in sodium silicate for one week and the corresponding Gaussian distribution of the diameters of the fibres;
- Fig. 5 illustrates an image, under the polarised light optical microscope, of cellulose fibres treated in sodium silicate for one month and the corresponding Gaussian distribution of the diameters of the fibres;
- Fig. 6 illustrates the Gaussian distribution of the diameters of the cellulose fibres before and after different treatment times in sodium silicate and the effect of this treatment on the colour of the fibres;
- Fig. 7 illustrates the diffractograms of the cellulose fibre from pure wood pulp and wood pulp treated in sodium silicate.
- Fig. 8 illustrates the reaction diagram relating to cleavage of the glucosidic bond with opening of the ring and formation of the hybrid polyhydroxy product that is produced under highly alkaline conditions.

### Detailed description of the invention

The present invention relates to a process for destructuring a cellulose pulp comprising the steps of:
a) mixing an alkaline aqueous solution comprising:
   - SiO₂, Na₂O in a ratio in the range from 1:1 to 4:1;
   - polyhydroxy components having a high molecular weight in the range from 200'000 to 650'000 g/mol in the form of fibres, wherein more than 50% of the fibres have a diameter with a size greater than or equal to 50 µm;
   - lignins having a molecular weight in the range from 800 to 80'000 g/mol,
   wherein the ratio in weight of SiO₂ and Na₂O to polyhydroxy components and lignins is from 4:100 to 8:100;
b) mixing at room temperature and ambient pressure for a time in the range from 2 to 6 months.
This enables optimal interaction between polyhydroxy components and lignins, and SiO₂ and Na₂O.

The alkaline aqueous solution of step a) preferably comprises SiO₂ and Na₂O in a ratio in the range from 1.5:1 to 3.5:1, even more preferably from 1.75 to 2.25.

In step a) a slurry is obtained in which the silicate ions of the alkaline solution of sodium silicate "intercalate" the single macromolecules of the cellulose, destructuring the network of hydrogen bonds.

In step b) the silica species -Si-O(H) condense with the neighbouring monomers leading to the formation of oligomers of the type H-(OSi(O)₃)n capable of creating strong hydrogen interactions with the layers of poly d-glucopyranose destructuring the macrostructure.

The result is a hybrid polyhydroxy compound in which the whole of the inorganic component (silica), interacting with the hydroxyl layers of poly d-glucopyranose, cleaves the high quantity of hydrogen bonds, enabling decompaction of the fibrils with "release" of macromolecules capable of reacting with any reagent.

Non-limiting examples of polyhydroxy components in which more than 50% of fibres have a diameter with a size greater than or equal to 50 µm are wood pulp (paper mill raw material), conifer, cotton, etc.

Non-limiting examples of polyhydroxy components in which more than 50% of fibres have a diameter with a size smaller than 50 µm are briquettes of short fibre cellulose coming from the tissue paper industry (sanitary towels, nappies, toilet paper).

The product obtained by the aforesaid process will be substantially destructured, in some cases also with cleavage of the glucose bonds of the cellulose and solubilisation thereof. The degree of destructuring can vary within certain limits depending on the ratios and on the quantities of components of the alkaline aqueous solution, and of the reaction conditions.

The products obtained by this process can be made to react with diisocyanates to produce polyurethanes (for example for packaging), with alkoxysilanes to produce polysilanes and with dicarboxylic acids to produce polyester resins.

In particular, the chemical treatment conducted in the presence of sodium silicate with high pH values enables, through a complex process:
a) isolation of the macromolecules from the fibrous structure with consequent reduction of the diameter of the fibres in time,
b) depolymerisation of the polyhydroxy macromolecules of the cellulose by alkaline hydrolysis, and
c) functionalisation of the polyhydroxy fragments obtained by silication.

From the destructuring process of the cellulose fibres, we obtain a material constituted by:
1) a viscous pulp in which the polyhydroxy fragments deriving from the cellulose are intimately (covalent bonds, vis-à-vis NMR results) chemically bonded with silicate phases, and
2) solid residues of the cellulose fibres which are in the destructuring/solubilising phase.

In particular, experimental evidence obtained through NMR analysis of the cellulose-silicate slurry showed that cleavage of the glucoside bond (which takes place on the anomeric C of glucopyranose) is obtained in conditions of high pH (>11) and long reaction times (more than two months).

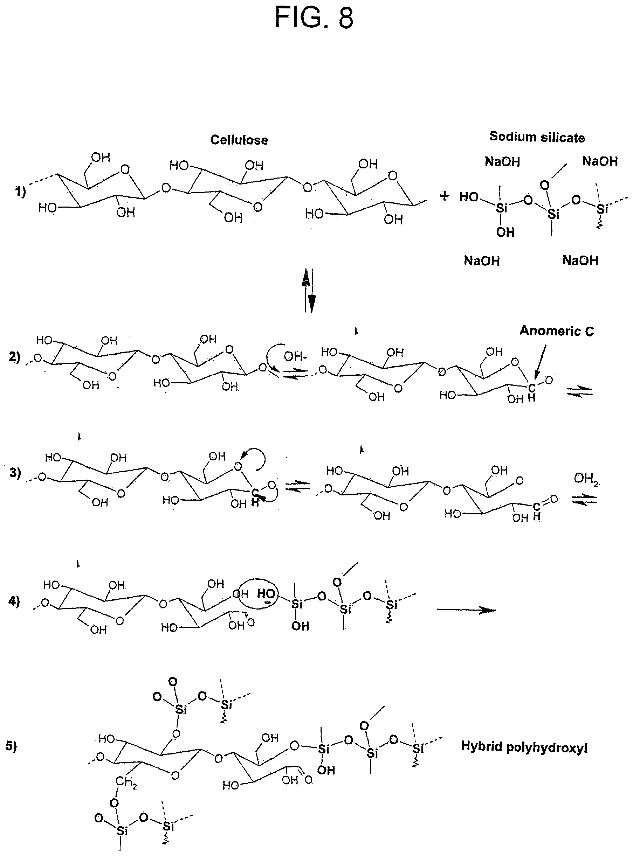

Fig. 8 indicates the diagram relating to the reaction mechanism relating to cleavage of the glucose bond with opening of the ring and formation of the hybrid polyhydroxy product.

In an alkaline aqueous solution, the hydroxyl groups (-OH) of the sodium silicate enable opening of the D-glucopyranose ring to the anomeric C (reaction 3). The hydroxyl groups of the product that form are capable of reacting, through a condensation reaction, with the silicate oligomers H-(OSi(O)3)n (reaction 4) producing the soluble hybrid polyhydroxyl.

### Advantages

While conventional processes (such as mercerisation) which make use of silicate solutions produce a solvated cellulose in its amorphous phase and in which type I crystallinity is modified into that of type II, the process according to the invention enables a destructured product to be obtained.

Moreover, conventional processes have considerable problems in the presence of lignin, so that it is necessary to separate it. Instead, in the process according to the invention, not only is it unnecessary to separate the lignin, but it has surprisingly been observed that this promotes the destructuring process, probably due to the greater content of amorphous phase in the wood, which promotes the destructuring process.

Moreover, it is not necessary to eliminate the water from the reaction with polyisocyanates, as the excess water is sequestered in the inorganic structures of the silicate and remain unavailable for the reactions with polyisocyanate.

### Examples

To analyse the product obtained, the following chemical-physical characterisations were carried out:
- X-ray diffraction (XRD); this technique enables destructuring of the crystalline structure present in the cellulose to be evaluated. In crystalline phase the system is not reactive, in destructured (amorphised) phase it is capable of reacting;
- molecular weight of the polysaccharide;
- hydroxyl index (number of OH groups), determined according to the standard ASTM D4274-05, method E (Standard test methods for testing polyurethane raw materials: determination of hydroxyl numbers of polyols) . In this case, for 0.14 g of wood pulp sample the hydroxyl number is 230.

### Characterisation of samples of matrices containing cellulose X-ray diffractometry (XRD)

Diffractometry analysis enables identification of the crystalline mineral phases bonded to the cellulose.

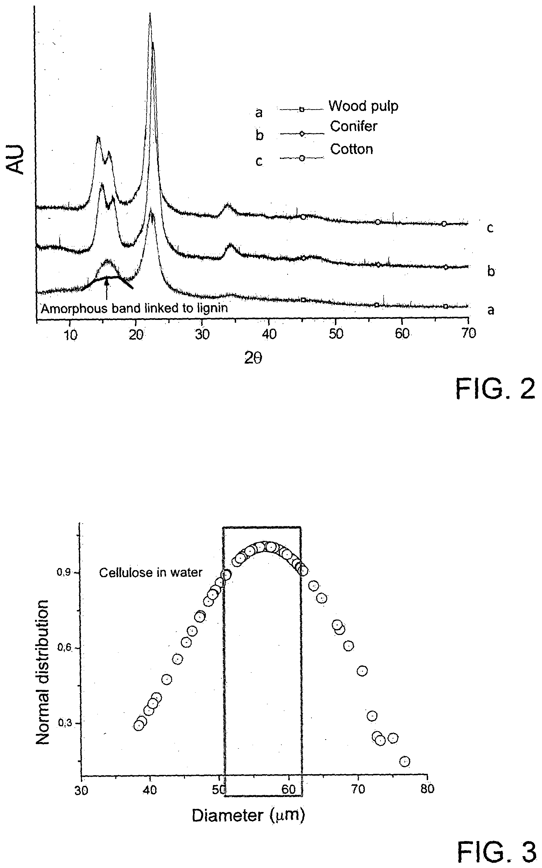

Fig. 2 shows the difractograms of the three systems analysed: conifer, cotton and wood pulp. Analysis of the diffractograms of cotton and conifer highlight crystallization peaks, bonded to the cellulose, at 2θ equal to approximately 14.8°, 16.3° and 22.6°, corresponding to the Miller index planes (11̅0), (110) and (220) of type I cellulose.

With regard to the diffractogram of the wood pulp a band can be observed (central diffractogram in Fig. 2) around the low values of 2θ, which highlights the presence of amorphous phase in the sample linked to the lignin (amorphous aromatic polymer); moreover, the peak at the value of 2θ=16.2° is associated with the superimposing of the reflection planes (11̅0) and (110) and that at the value of 2θ=22.3° is linked to the reflection plane (200), for these values the corresponding crystalline structure is that of type IV₁ cellulose, which is less orderly than that of type I.

### Polarised optical microscope

Samples of cellulose fibre from wood pulp were subjected to birefringence analysis using a polarised optical microscope.

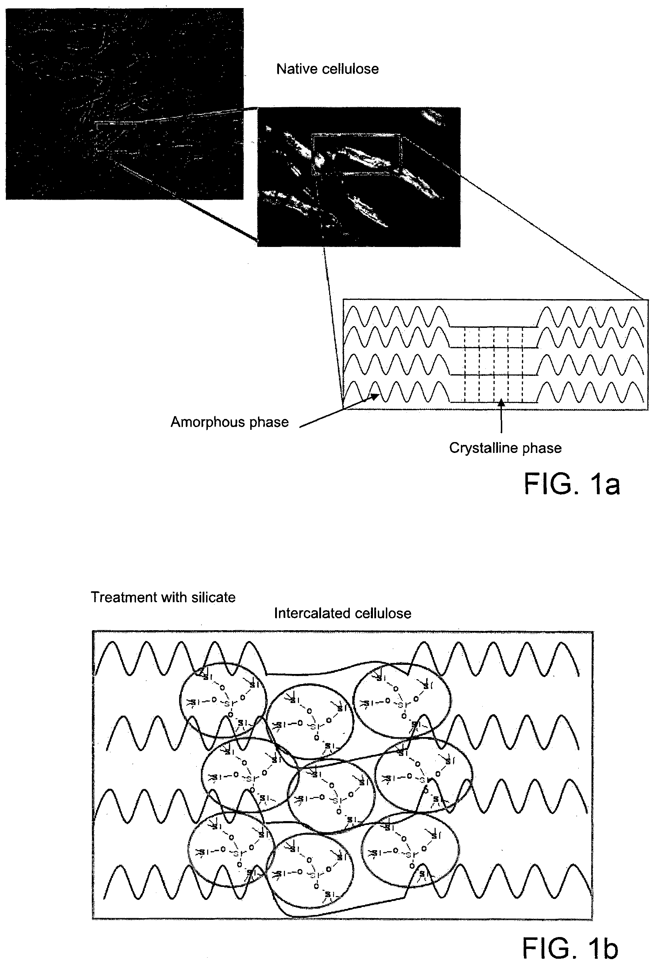

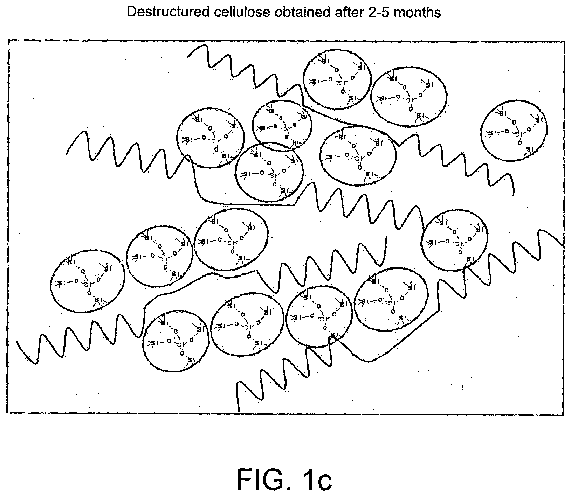

Fig. 1A shows images of the cellulose fibres, in wood pulp, in polarised light, and the corresponding Gaussian curve relating to the diameters of the fibres (Fig. 3).

### Characterisation of the matrices containing cellulose in an alkaline mixture of sodium silicate

By way of example, the treatment of wood pulp as precursor to obtain a polyhydroxyl (polyol) is indicated.

Sodium silicate (SiO₂/Na₂O=2) was used as dispersion medium of the wood pulp; this solution is strongly basic (pH>14) as it contains NaOH, and, in fact, it is known that aqueous solutions of strong bases are capable of cleaving inter- and intramolecular hydrogen bonds of the cellulose chain, thereby causing good dispersion in the aqueous solvent. Moreover, the presence of silica in the solution improves the mechanical and fire properties of the product to be synthesised.

For preparation of the polyol, 3.9 g of lignocellulose from wood pulp was dispersed in 100 g of sodium silicate (SiO₂/Na₂O). The slurry obtained was characterised using optical (polarisation microscope) and mineral (XRD) microscopy to evaluate the variation in diameter of the fibre and of crystallinity following a destructuring process induced by the colloidal solution.

### Optical microscopy

The polarised light optical microscope was used to observe the interaction of the cellulose fibres when dispersed in an alkaline solution of sodium silicate. In particular, the phenomena of swelling and the behaviour in solution of the cellulose crystalline phase were observed, and the average diameter of the fibres before and after the destructuring treatment was determined.

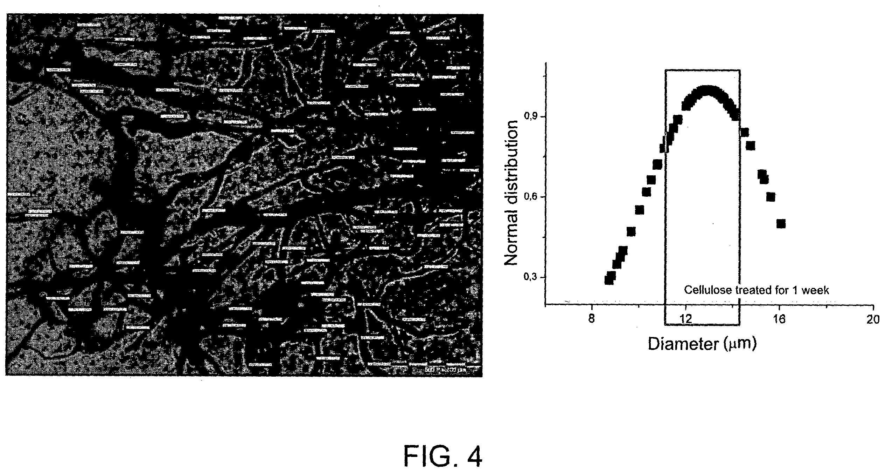

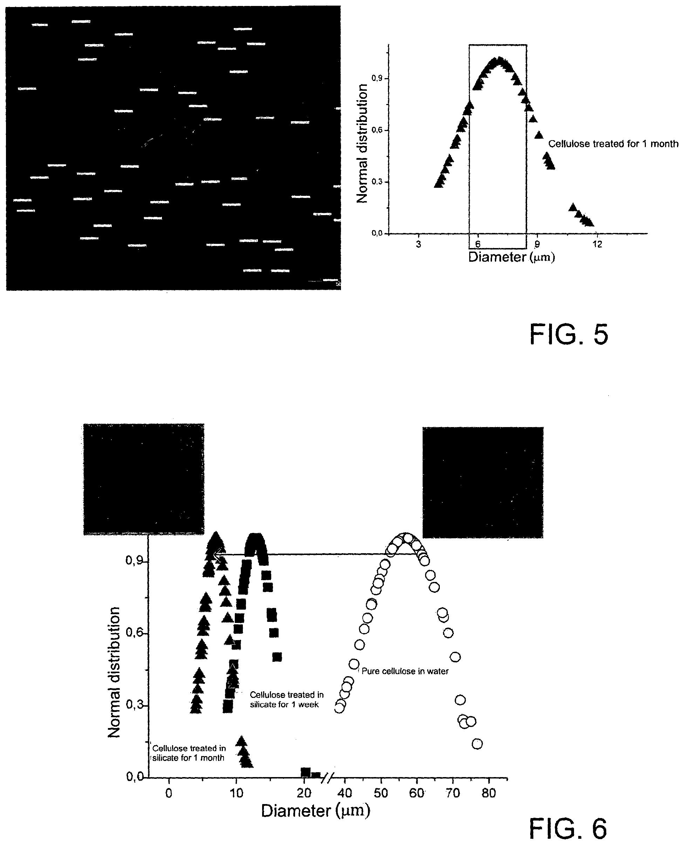

Figs. 4 and 5 show images of the cellulose fibres from wood pulp subjected to treatment in sodium silicate (R=2) for 1 week (Fig. 4) and 1 month (Fig. 5) and the corresponding Gaussian curves.

In particular, from the 3 images it is possible to determine the diameters of the fibres whose Gaussian curves are indicated in Fig. 6, where a decrease in the average diameter of the fibres, with respect to the 1 week system, of 50% can be observed (destructuring) . In Fig. 6 it is possible to observe, at the single Gaussian curves, images of the cellulose mixed with the silicate after 1 week (white) and the cellulose-silicate treated/destructured for 1 month (yellow).

### XRD

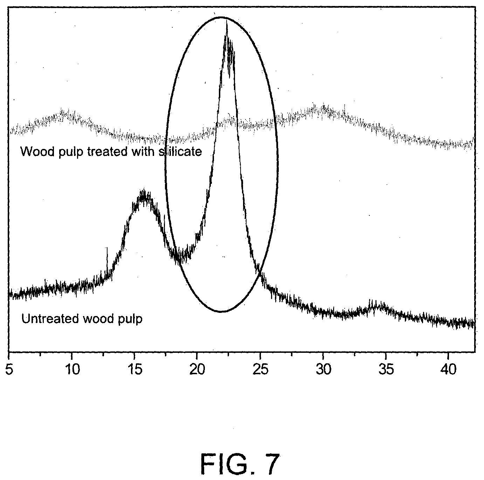

Fig. 7 shows the diffractograms of the wood pulp, pure and in sodium silicate. Analysis of the diffractograms shows that the crystalline peaks of the cellulose have all but disappeared, and only a crystalline residue, indicated in Fig. 7, is detected. Instead, two bands are very evident at values of 2θ equal to 10° and 31°, associated with the presence of a high amorphous phase inside the system being analysed. This result confirms what was stated above, i.e. that the dispersion system is capable of amorphising the cellulose fibres, making them more susceptible to interactions/reactions with other reagents.

### Application in the production of polyurethanes

Polyurethanes are polymers generally obtained through a polyaddition reaction between polyfunctional alcohols (polyether polyols or polyester polyols) and polyisocyanates (MDI), in the presence of catalysts and other additives, to form urethane bonds. It is based on the following reactions of **(1)** polyaddition (formation of the polyurethane polymer phase) and **(2)** expansion (formation of the expanding gas):
**(1)** 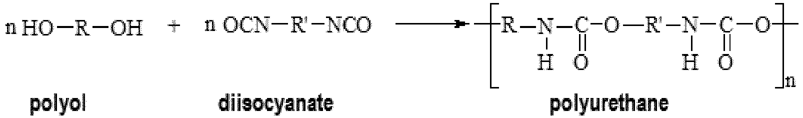
**(2)**

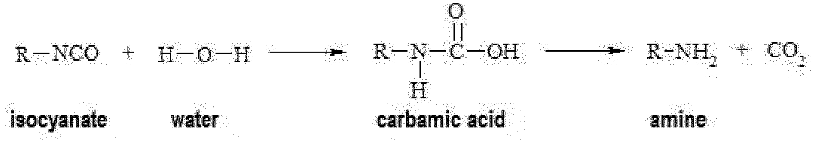

To obtain the polyurethane formation the isocyanate/hydroxyl (NCO/OH) stoichiometric ratio must be equal to or greater than 1. In the case in which the ratio is greater than 1, in addition to the formation reaction of the "*urethane*" group, "*isocynurate*" is also formed, as the excess of diisocynate induces trimerisation reactions of the Methyl Diphenyl Diisocyanate (MDI).

The polyhydroxy precursor, polyol, can be substituted with a cellulose based reagent, which must however undergo a process of solubilisation, polymerisation and subsequent removal of organic solvents. In the present example, the raw material containing cellulose has been subjected to a destructuring process of the polysaccharide, making the hydroxyls of the chains available to react; moreover, the solvent used is embedded in the cellulose chain, remaining trapped therein, so that no removal process is necessary.

For synthesis of polyurethane foam, both wood pulp (paper mill raw material) and briquettes of short fibre cellulose from the tissue paper industry (sanitary towels, nappies, toilet paper) were used as raw material containing cellulose, and a basic solution with silicate matrix (SiO₂:Na₂O=2:1) was used as solvent/dispersant. Besides wood pulp, conifer, cotton or paper mill scrap can be used.

### Synthesis of composite polyurethane from long fibre polyhydroxyl

For synthesis of polyurethane foam the following were used as base precursors: methylene diphenyl diisocyanate (MDI) and renewable polyol, based on a cellulose suspension in sodium silicate (ratio R=2), the suspension water was used as expanding agent. Amine based additives and potassium salts, necessary for catalysis of the polymerisation and expansion reactions, flame retardants and silicone surfactants as polyurethane foam stabiliser, were also used.

The formulation prepared in the laboratory using polyol from paper mill scraps is indicated below:

| **Formulation 1** | |
|---|---|
| Renewable polyol | 736 g |
| MDI | 1300 g |
| Flame retardant (TCPP) | 268 g |
| Polymerisation catalyst: CH₃COOK | 4.5 g |
| Expansion catalyst: PM40 | 15.2 g |
| Surfactant: L6164 | 13.7 g |

The polyol from paper mill scraps is in the form of a very viscous pulp and it is therefore necessary to use a fluidifying agent that does not interact with other reagents. For this purpose a flame retardant was used, although any other fluidifying agent could be used.

### Synthesis of composite polyurethane from short fibre polyhydroxyl

Polyurethane foams were produced using a mixture of silicate/short cellulose fibres in a ratio in weight in the range from 4/7 g of short fibre cellulose to 100 g of sodium silicate; the mixture was mercerised for 48h.

**Table 2 indicates a formulation produced with this mixture.**

| **Formulation 2** | |
|---|---|
| Short fibre renewable polyol | 350 g |
| MDI | 600 g |
| Polymerisation catalyst: CH₃COOK | 4 g |
| Amine catalyst:C41 | 5 g |
| Silicone surfactant L6164 | 7 g |

Short fibre renewable polyol is much more fluid than the polyol of the previous example. For this reason, it is unnecessary to add a fluidifying agent.

### Operating procedure

Predefined quantities (indicated in Table 1) of sodium silicate and cellulose solution, catalysts, surfactants and flame retardants are weighed and mixed accurately. A predefined quantity of MDI is added under stirring.

The mix is poured into a closed mould measuring 50x50x5cm and left to polymerise and expand at room temperature and ambient humidity.

### Operating procedure for synthesis of polyurethane composite

The formulation indicated in Table 3 was prepared for cases in which a silicate mixture with SiO₂/Na₂O ratio greater than 2.5 is used for destructuring the long fibre cellulose. As this mixture has an excessive quantity of water it accelerates the reaction speed of the polyurethane foam in an uncontrollable manner. Moreover, given the exothermic nature of the reaction, temperatures increase suddenly causing part of the water to evaporate (temperatures in excess of 130°C are reached).

For this reason, to make the whole synthesis and expansion process controllable, an adsorbent/dehydrating filler, capable of adsorbing the high water content present in the polyol, is added to the mix.

Different fillers were tested: sodium/calcium aluminate, calcium carbonate and calcium sulphate. The formulation with calcium sulphate is indicated in the table.

| **Formulation 3** | |
|---|---|
| Renewable polyol | 758.2 g |
| MDI | 1350 g |
| Flame retardant | 225.8 g |
| Polymerisation catalyst: CH₃COOK | 3.8 g |
| Expansion catalyst: PM40 | 12.8 g |
| Surfactant: L6164 | 11.5 g |
| CaSO₄ (gypsum) | 10 g |

## Claims

1. A process for destructuring a cellulose pulp comprising the steps of:
a) mixing an alkaline aqueous solution comprising:
- SiO₂, Na₂O in a ratio in the range from 1:1 to 4:1;
- polyhydroxy components having a high molecular weight in the range from 200'000 to 650'000 g/mol in the form of fibres, wherein more than 50% of the fibres have a diameter with a size greater than or equal to 50 µm;
- lignins having a molecular weight in the range from 800 to 80'000 g/mol,
wherein the ratio in weight of SiO₂ and Na₂O to polyhydroxy components and lignins is from 4:100 to 8:100;
b) mixing at room temperature and ambient pressure for a time in the range from 2 to 6 months.

2. The process according to claim 1, wherein SiO₂ and Na₂O are in a ratio in the range from 1.5:1 to 3.5:1.

3. The process according to claim 2, wherein SiO₂ and Na₂O are in a ratio in the range from 1.75:1 to 2.25:1.

4. A product obtained by the process according to any of claims 1 to 3.

5. Use of the product according to claim 4 for producing polyurethanes, polysilanes and polyesters.

## Patentansprüche

1. Verfahren zum Destrukturieren eines Cellulosebreis, umfassend die Schritte:
a) Mischen einer alkalischen wässrigen Lösung, umfassend:
- SiO₂, Na₂O in einem Verhältnis im Bereich von 1 : 1 bis 4 : 1;
- Polyhydroxykomponenten mit einem hohen Molekulargewicht im Bereich von 200.000 bis 650.000 g/mol in Form von Fasern, wobei mehr als 50 % der Fasern einen Durchmesser mit einer Größe von gleich oder größer als 50 µm aufweisen;
- Lignine mit einem Molekulargewicht im Bereich von 800 bis 80.000 g/mol, wobei das Gewichtsverhältnis von SiO₂ und Na₂O zu Polyhydroxykomponenten und Ligninen von 4 : 100 bis 8 : 100 beträgt;
b) Mischen bei Raumtemperatur und Umgebungsdruck für einen Zeitraum im Bereich von 2 bis 6 Monaten.

2. Verfahren nach Anspruch 1, wobei SiO₂ und Na₂O in einem Verhältnis im Bereich von 1,5 : 1 bis 3,5 : 1 vorliegen.

3. Verfahren nach Anspruch 2, wobei SiO₂ und Na₂O in einem Verhältnis im Bereich von 1,75 : 1 bis 2,25 : 1 vorliegen.

4. Produkt erhalten durch das Verfahren gemäß einem der Ansprüche 1 bis 3.

5. Verwendung des Produkts gemäß Anspruch 4 zur Herstellung von Polyurethanen, Polysilanen und Polyestern.

## Revendications

1. Procédé de déstructuration d'une pâte de cellulose comprenant les étapes de :
a) mélange d'une solution alcaline aqueuse comprenant :
- du SiO₂, Na₂O dans un rapport dans la plage de 1/1 à 4/1 ;
- des composants polyhydroxy de poids moléculaire élevé dans la plage de 200 000 à 650 000 g/mol sous la forme de fibres, où plus de 50 % des fibres ont un diamètre d'une taille supérieure ou égale à 50 µm ;
- des lignines ayant un poids moléculaire dans la plage de 800 à 80 000 g/mol,
dans lequel le rapport en poids du SiO₂ et Na₂O aux composants polyhydroxy et lignines est de 4/100 à 8/100 ;
b) mélange à température ambiante et pression ambiante pendant une durée dans la plage de 2 à 6 mois.

2. Procédé selon la revendication 1, dans lequel le SiO₂ et Na₂O sont dans un rapport dans la plage de 1,5/1 à 3,5/1.

3. Procédé selon la revendication 2, dans lequel le SiO₂ et Na₂O sont dans un rapport dans la plage de 1,75/1 à 2,25/1.

4. Produit obtenu par le procédé selon l'une quelconque des revendications 1 à 3.

5. Utilisation du produit selon la revendication 4 pour la production de polyuréthannes, polysilanes et polyesters.
